# EUROPÄISCHE PATENTANMELDUNG

(11) **EP 1 236 941 A2**
(43) Veröffentlichungstag der Anmeldung: **04.09.2002**
(21) Anmeldenummer: 02003416.1
(22) Anmeldetag: 14.02.2002
(51) Int. Cl.: F16K 31/06

(54) **Gasventil**

(30) Priorität: 16.02.2001 DE 10107194
(71) Anmelder: HeaTec Thermotechnik GmbH, 73066 Uhingen (DE); Pauden Scientific & Technological Co. Ltd., Taipei, Sanchung City (TW)
(72) Erfinder: Schwarz, Dr. Hans Jochen, 70190 Stuttgart (DE); Huang, Chung-Chen, Taipei, Sanchung City (TW)
(74) Vertreter: Patentanwälte Rüger, Barthelt & Abel

(57) **Zusammenfassung**

Eine Magnetventileinrichtung (1) weist eine Magnet-Betätigungseinrichtung (2) und eine Magnet-Halteeinrichtung (3) auf, wobei die Magnet-Betätigungseinrichtung (2) durch eine Steuereinrichtung (31) nur kurzzeitig betätigt und die Magnet-Halteeinrichtung (3) durch Thermostrom eines Thermostromgenerators (34) während der Öffnungsphase der Magnetventileinrichtung (1) dauernd bestromt wird. Batteriestrom benötigt diese Magnetventileinrichtung (1) nur zur Überführung aus der Schließstellung (5) in die Offenstellung (6) sowie ggfs. noch für einige Sekunden bis zur ausreichenden Erzeugung von Thermostrom.

## Beschreibung

Die Erfindung betrifft eine stromsparende Magnetventileinrichtung zum Aufbau von stromsparenden automatischen Gas-Steuereinrichtungen.

Zur Wärmeerzeugung, bspw. zur Erzeugung von Heizwärme, insbesondere aber zur Warmwasserbereitung oder als Raumheizgeräte, kommen häufig Geräte mit Gasbrennern zum Einsatz, wobei der Betrieb der Gasbrenner möglichst automatisch gesteuert werden soll. Zur Steuerung der Gasbrenner sind Ventile erforderlich, die die Gaszufuhr zumindest freigeben und sperren können.

Die Zündung, der Betrieb, die Überwachung des Betriebs und das Abschalten der Gasbrenner soll möglichst automatisch erfolgen. Sollen entsprechende Automaten, sogenannte Feuerungsautomaten, vorgesehen werden, müssen diese auch die Gaszufuhr zu dem Brenner beeinflussen, freigeben oder absperren können. Entsprechende Ventile müssen dazu mit Betätigungseinrichtungen versehen werden, die bspw. elektrisch steuerbar sind. Der Einsatz von Feuerungsautomaten und von ihnen gesteuerter elektrisch betätigter Ventile erfordert in der Regel einen elektrischen Netzanschluss des gasbetriebenen Geräts. Dies schränkt die Anwendungsbereiche ein.

Davon ausgehend ist es Aufgabe der Erfindung, eine stromsparende Magnetventileinrichtung zu schaffen, die zum Einsatz an gasbetriebenen Geräten geeignet ist. Insbesondere soll die Magnetventileinrichtung so stromsparend ausgebildet sein, dass dauerhafter Batteriebetrieb möglich und ein Netzanschluss nicht erforderlich ist.

Die erfindungsgemäße Magnetventileinrichtung löst diese Aufgabe durch Kombination einer Magnetbetätigungseinrichtung mit einer Magnet-Halteeinrichtung, die mit einem Thermostromgenerator verbunden ist. Die Magnet-Betätigungseinrichtung dient der Überführung des Stellglieds aus der Schließstellung in die Offenstellung, wozu sie lediglich kurzzeitig betätigt werden muss. Die Magnet-Halteeinrichtung dient dann dazu, das Stellglied in der Offenstellung zu halten, wozu wegen des Thermostromgenerators kein Batteriestrom erforderlich ist. Zum Öffnen des Magnetventils ist somit lediglich ein kurzer Batteriestromimpuls erforderlich. Ist das Ventil in Offenstellung überführt, kann der Speisestrom der Magnetbetätigungseinrichtung auf einen Haltestromwert abgesenkt werden, wodurch der Energiebedarf minimiert wird. Nach Ablauf einer festgelegten Zeitspanne oder wenn erfasst wird, dass ein ausreichender Thermostrom erzeugt wird, übernimmt die Magnet-Halteeinrichtung das Festhalten des Stellglieds in Offenstellung, so dass das Ventil vollkommen ohne Entnahme von Elektroenergie aus einer Batterie offengehalten wird.

Das Stellglied ist vorzugsweise in lediglich einer Richtung linear beweglich gelagert und auf seine Schließstellung hin vorgespannt. Damit kann das Ventil ohne Fremdenergie in Schließstellung gehalten werden. Die Federkennlinie des Federelements kann linear oder bedarfsweise auch nichtlinear eingestellt sein. Bei einer einfachen robusten Ausführungsform wird als Federelement eine Feder mit einer Kennlinie verwendet, die flach verläuft, d.h. bei der sich die Federkraft bei einer Bewegung des Stellglieds nur wenig ändert. Bedarfsweise kann auch eine nichtlineare Federkennlinie mit einem fallenden Kennlinienabschnitt zur Anwendung kommen, bei der z.B. die Federkraft in Schließstellung größer ist als in Offenstellung. Dies insbesondere, wenn die Haltekraft der Magnet-Halteeinrichtung minimiert werden soll.

Die Magnet-Halteeinrichtung wird vorzugsweise durch einen ortsfest gelagerten Elektromagneten gebildet, dessen Wicklung in Betrieb von dem Thermostrom des Thermogenerators durchflossen ist. Der zugeordnete Anker ist in diesem Fall beweglich gelagert und mit dem Stellglied verbunden. Diese Ausführungsform hat den Vorzug, dass die bewegten Massen gering sind. Der Anker kann vergleichsweise leichter ausgeführt werden als der ortsfest gelagerte Elektromagnet. Dieser ist vorzugsweise als Topfmagnet ausgebildet, dessen Symmetrieachse mit der Bewegungsrichtung des Ankers übereinstimmt. Dies ergibt einen symmetrischen, seitenkraftfreien Aufbau.

Bei einer vorteilhaften Ausführungsform gehört zu der Magnet-Betätigungseinrichtung eine Antriebseinrichtung und eine Fangeinrichtung. Die Antriebseinrichtung dient lediglich zur Überführung des Stellglieds aus seiner Schließstellung in seine Offenstellung. Die Fangeinrichtung dient dann dazu, das Stellglied so lange in Offenstellung zu halten, bis die Magnet-Halteeinrichtung eine genügend große Haltekraft erzeugt und somit die Haltefunktion von der Fangeinrichtung übernimmt. Die Fangeinrichtung hat somit die Aufgabe, das Stellglied in der Zeit zwischen dem ersten Öffnen des Ventils und einer ausreichend großen Haltekrafterzeugung durch die Magnet-Halteeinrichtung offenzuhalten.

Die Fangeinrichtung hat weitere Bedeutung: Mit der Fangeinrichtung kann das Stellglied in Offenstellung zur Ruhe gebracht werden, so dass die Magnet-Halteeinrichtung die Haltefunktion für das bereits ruhende Stellglied übernimmt. Somit wird es auf einfache Weise möglich, eine Magnetventileinrichtung mit der Magnet-Betätigungseinrichtung mit einem kräftigen Impuls zu öffnen, wodurch ein sicheres Öffnen unter allen Umständen erreicht wird. In Offenstellung wird das Stellglied dann durch die Fangeinrichtung arretiert, wodurch die Gefahr, dass das Ventil durch einen Prellvorgang oder ähnliches wieder abfällt (d.h. schließt), minimiert wird. Hat sich das Stellglied beruhigt, übernimmt die Magnet-Halteeinrichtung dann die Haltefunktion, wozu nur geringe Halteströme erforderlich sind, die von einem Thermoelement erzeugt werden können. Es ist dabei möglich, die Haltekraft zu gering zu halten, dass die Federkraft der das Stellglied auf seine Schließstellung hin vorspannenden Feder gerade eben überwunden wird. Dies dient der Betriebssicherheit. Wenn nämlich der erzeugte Thermostrom unter einen Grenzwert fällt, ist sichergestellt, dass das Ventil durch die Wirkung des Federelements schließt.

Die Magnet-Betätigungseinrichtung und die Fangeinrichtung können bedarfsweise baulich miteinander vereinigt sein, bspw. indem sie als Elektromagnete mit gemeinsamen Magnetkreis ausgebildet sind. Es ist jedoch vorteilhaft, die Magnet-Betätigungseinrichtung und die Fangeinrichtung baulich voneinander zu trennen. Damit kann die Betätigungseinrichtung daraufhin optimiert werden, mit möglichst geringer aufzuwendender elektrischer Arbeit über einen erforderlichen Betätigungsweg hinweg eine ausreichende Antriebskraft zu erzeugen, während die Fangeinrichtung daraufhin optimiert werden kann, eine relativ hohe Haltekraft in einem kleinen Fangbereich zu erzeugen - und dies mit möglichst geringem Energieaufwand. Die Fangeinrichtung kann baulich mit der Halteeinrichtung vereinigt werden.

Die Magnet-Betätigungseinrichtung ist demgemäß vorzugsweise ein Zugmagnet mit einem zylindrischen Anker, der von einer Magnetspule umgeben ist und bei Bestromung der Spule in diese hineingezogen wird. Die Fangeinrichtung ist dagegen vorzugsweise von einem Topfmagneten gebildet, der eine Ankerscheibe anzieht.

Die Magnetventileinrichtung kann lediglich ein einziges Ventilverschlussglied und einen diesem zugeordneten Ventilsitz oder auch mehrere Ventilverschlussglieder und Ventilsitze umfassen, die zu parallelen Strömungswegen oder zu verzweigenden Strömungswegen gehören. Es ist möglich, die so gebildeten Ventile gleichzeitig oder nacheinander öffnen und schließen zu lassen. Letzteres ist bevorzugt, um einen Gasbrenner bspw. derart steuern zu können, dass nach einem ersten Öffnungsimpuls durch ein Zündgasventil zunächst eine Zündgasmenge freigegeben wird und dass nach einem zweiten Öffnungsimpuls die gewünschte größere Gasmenge freigegeben wird. Dazu kann die Fangeinrichtung so ausgebildet sein, dass sie mehrere Fangpositionen festlegt. Dazu ist es bspw. möglich, dem ortsfest gelagerten Topfmagneten der Fangeinrichtung mehrere an dem Stellglied vorgesehene Ankerscheiben zuzuordnen, von denen wenigstens eine begrenzt axial beweglich ist. Wird durch einen Öffnungsimpuls der Magnet-Betätigungseinrichtung die erste Ankerscheibe mit dem Elektromagneten der Magnet-Halteeinrichtung in Berührung gebracht, kann diese hier haften bleiben und das Stellglied in einer Zwischenposition (Fangposition) arretieren. Ein zweiter Öffnungsimpuls der Magnet-Betätigungseinrichtung, die das Stellglied noch weiter in Richtung Offenstellung bewegt, bringt dann die zweite Haltescheibe in Berührung mit dem Magnetkreis des Haltemagneten und legt das Stellglied somit in Offenstellung fest. Auf diese Weise kann ein Brenner mit einfachsten Mitteln so gesteuert werden, dass er zunächst mit einer Teilleistung gezündet und nach Ablauf einer bestimmten Zeit durch einen weiteren Betätigungsimpuls auf volle Leistung geschaltet wird.

Mit der Magnetventileinrichtung nach einem der entsprechenden Ansprüche lässt sich jeweils eine Gassteuereinrichtung aufbauen, die zwei verschiedene Versorgungsquellen für Elektroenergie aufweist bzw. nutzt. Eine erste Versorgungsquelle ist bspw. batteriegestützt und liefert lediglich den Öffnungsimpuls für die Magnetventileinrichtung. Das Halten des Ventils in Offenstellung übernimmt diese Versorgungsquelle allenfalls für einen beschränkten Zeitraum. Die Magnethalteeinrichtung ist jedoch an eine zweite Versorgungsquelle angeschlossen, die bspw. durch einen Thermostromgenerator, z.B. ein Thermoelement, gebildet ist. Dadurch kann die Gassteuereinrichtung nach dem Öffnen der Magnetventileinrichtung ohne Batteriestrom auskommen - das Ventil bleibt durch den Thermostrom in Offenstellung. Die Versorgungsquellen können dabei nach einem vorgegebenen Zeitmuster oder nach Eintritt bestimmter Ereignisse wie z.B. Zünden der Flamme und Feststellen einer ordnungsgemäß brennenden Flamme ein- und ausgeschaltet werden. Damit kann sichergestellt werden, dass die Magnetventileinrichtung mit Batteriestrom so lange offengehalten wird, bis die Haltefunktion von dem Thermostrom des Thermoelements übernommen wird.

Zu diesen und weiteren Einzelheiten von vorteilhaften Ausführungsformen der Erfindung wird auf die Zeichnung, die nachfolgende Beschreibung und Unteransprüche verwiesen.

In der Zeichnung sind Ausführungsbeispiele der Erfindung veranschaulicht. Es zeigen:
Fig. 1 eine Magnetventileinrichtung für stromsparende batteriebetriebene Steuereinrichtungen für Gasgeräte,
Fig. 2 einzelne Strom- und Spannungsimpulse einer solchen Steuereinrichtung,
Fig. 3 eine weitere Ausführungsform einer Magnetventileinrichtung für stromsparende batteriebetriebene Steuergeräte für Gasgeräte, in Prinzipdarstellung,
Fig. 4 eine Steuereinrichtung für die Magnetventileinrichtung nach Figur 3, als Prinzipschaltbild,
Fig. 5 eine weitere Ausführungsform einer Steuereinrichtung für die Magnetventileinrichtung nach Figur 3, als Prinzipschaltbild,
Fig. 6 eine weitere Ausführungsform einer Magnetventileinrichtung für ein Gasventil, in Offenstellung und längsgeschnittener Darstellung,
Fig. 7 die Magnetventileinrichtung nach Figur 6, in Schließstellung und längsgeschnittener Darstellung,
Fig. 8 die Magnetventileinrichtung nach Figur 6 und 7, in einer Zwischenstellung mit Freigabe einer Zündgasmenge, in längsgeschnittener Darstellung, und
Fig. 9 eine Doppel-Magnetventileinrichtung mit zwei Magnetventileinrichtungen gleicher Bauart, zum Betrieb von Gasgeräten.

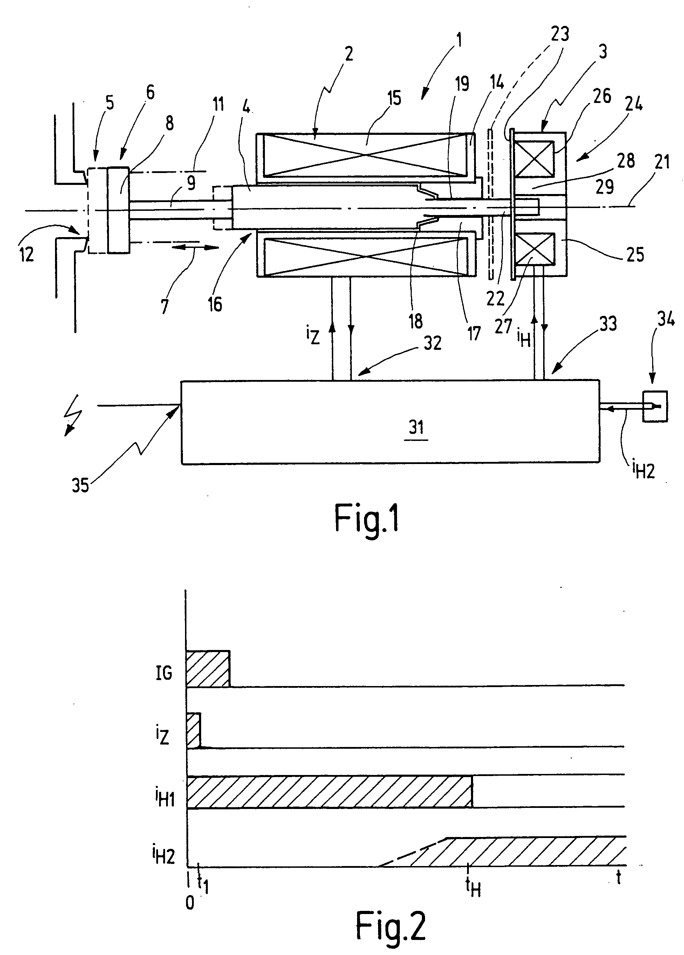

In Figur 1 ist eine Magnetventileinrichtung 1 veranschaulicht, zu der eine Magnet-Betätigungseinrichtung 2 und eine Magnet-Halteeinrichtung 3 gehören. Die Magnet-Betätigungseinrichtung 2 dient dazu, ein Stellglied 4 aus einer Schließstellung 5, die in Figur 1 gestrichelt dargestellt ist, in eine Offenstellung 6 zu überführen. Die Bewegung findet in Axialrichtung des Stellglieds 4 statt und ist in Figur 1 durch einen Pfeil 7 angedeutet.

Das Stellglied 4 ist mit einem Ventilschlussglied 8 verbunden, das bspw. durch einen scheibenförmigen Fuß mit einer daran befestigten Dichtung gebildet ist. Zur Verbindung dient eine Stange 9 (Ventilspindel). Das Ventilverschlussglied 8 ist über eine in Figur 1 strichpunktiert angedeutete Druckfeder 11 auf seine Schließstellung 5 hin vorgespannt.

Dem Ventilverschlussglied 8 ist ein Ventilsitz 12 zugeordnet, der durch eine von dem Ventilverschlussglied 8 verschließbare Öffnung gebildet ist.

Die Magnet-Betätigungseinrichtung 2 ist vorzugsweise als Zugmagnet ausgebildet. Sie weist eine auf einem ortsfest gelagerten Spulenkörper 14 angeordnete Wicklung 15 auf. Der Spulenkörper 14 weist eine Zentralöffnung 16 auf, deren Durchmesser geringfügig größer ist als der Durchmesser des vorzugsweise im Wesentlichen zylindrisch ausgebildeten Stellglieds 4. Der Spulenkörper 14 und das Stellglied 4 sind koaxial zueinander ausgebildet, wobei das Stellglied 4 in die Zentralöffnung 16 ragt. In der Zentralöffnung 16 ist ein Flussleitstück 17 angeordnet, das mit dem Stellglied 4 einen Luftspalt 18 festlegt. Der Luftspalt 18 ist vorzugsweise kegelstumpfförmig ausgebildet, d.h. im Wesentlichen durch Konusflächen begrenzt. Die Luftspaltweite hängt von der Axialposition des Stellglieds 4 ab. In Schließstellung 5 weist der Luftspalt 18 seine Maximalgröße auf. In Offenstellung 6 weist er seine Minimalgröße auf, d.h. das Stellglied 4 berührt mit seiner konischen Stirnfläche die konische Öffnung des Flussleitstücks 17 oder schließt mit dieser nur einen geringen Spalt ein.

Die Wicklung 15 ist so beschaffen und bemessen, dass der aus einer festgelegten Spannungsquelle aufgenommene Strom ein solches Magnetfeld erzeugt, dass das als Anker wirkende Stellglied 4 gegen die Kraft der Druckfeder 11 aus seiner Schließstellung 5 in seine Offenstellung 6 überführt wird, d.h. dass das Stellglied 4 von dem Flussleitstück 17 angezogen wird.

Das Flussleitstück 17 weist eine Mittelöffnung 19 auf. Diese ist, wie auch das Stellglied 4 und der Spulenkörper 14, koaxial zu einer Längsmittelachse 21 angeordnet. Durch die Mittelöffnung 19 ragt ein Stift 22, der fest mit dem Stellglied 4 verbunden ist. Der Stift 22 trägt eine Ankerscheibe 23, die somit starr mit dem Stellglied 4 und mit dem Ventilverschlussglied 8 verbunden ist. Ist das Stellglied 4 in Offenstellung 6, befindet sich die Ankerscheibe 23 in der in Figur 1 in dicken Linien dargestellten Position. Ist das Stellglied 4 in Schließstellung 5 überführt, befindet sich die Ankerscheibe 23 in der in Figur 1 gestrichelt dargestellten Position.

Die Ankerscheibe 23 gehört zu der Magnet-Halteeinrichtung 3, zu der außerdem ein Topfmagnet 24 gehört. Der Topfmagnet 24 weist einen weichmagnetischen Kern 25 auf, der im Wesentlichen als flacher Zylinder ausgebildet ist. In einer koaxial zu der Längsmittelachse 21 angeordneten Ringnut 26, die auf einer Flachseite des Kerns 25 offen ist, sitzt eine Spule 27. Diese umgibt einen zylindrischen Mittelschenkel 28 des Kerns 25. Der Mittelschenkel 28 weist eine Zentralöffnung 29 auf, die koaxial zu der Längsmittelachse 21 angeordnet ist und in die der Stift 19 ragt.

Die Magnetventileinrichtung 1 ist mit einer Steuereinrichtung 31 verbunden. Diese weist einen über zwei Leitungen mit der Magnet-Betätigungseinrichtung 2 verbundenen Betätigungsausgang 32 und einen mit der Magnet-Halteeinrichtung 3 verbundenen Halteausgang 33 auf. An den Ausgängen 32, 33 gibt die Steuereinrichtung 31 solche Spannungen oder Ströme ab, dass das Stellglied 4 bedarfsweise aus seiner Schließstellung 5 in seine Offenstellung 6 überführt und in dieser gehalten wird. Die Steuereinrichtung 31 beinhaltet eine elektrische Spannungsquelle, z.B. eine Batterie (elektrisches Primärelement) mit langer Lebensdauer, bspw. eine Lithiumzelle mit etwa 20 Ah Kapazität. Als weitere elektrische Quelle nutzt die Steuereinrichtung 31 einen Thermostromgenerator 34, bspw. ein Thermoelement.

Die Steuereinrichtung kann, wenn dies erforderlich ist, für weitere Funktionen eingerichtet sein, bspw. kann die Steuereinrichtung mit einem Zündspannungsgenerator verbunden sein oder einen solchen enthalten. Dies ist in Figur 1 durch einen Zündspannungsausgang 35 angedeutet, der zu einer Funkenstrecke führt.

Die insoweit beschriebene Magnetventileinrichtung arbeitet wie folgt:

Zur Verdeutlichung der Arbeitsweise wird zunächst angenommen, dass sich das Ventilverschlussglied 8 in der in Figur 1 gestrichelt dargestellten Schließstellung 5 befindet. Die Druckfeder 11 drückt das Ventilverschlussglied 8 gegen den Ventilsitz 12. Erhält die Steuereinrichtung 31 nun den Befehl, die Magnetventileinrichtung 1 zu öffnen oder ergibt sich die Anforderung für das Öffnen der Magnetventileinrichtung 1 in der Steuereinrichtung 31 selbst, erfolgt die Öffnung der Magnetventileinrichtung 1 nach dem in Figur 2 veranschaulichten Schema. Zunächst gibt die Steuereinrichtung 31 an ihrem Betätigungsausgang 32 ein kurzzeitiges Spannungs- oder Stromsignal ab. Dieses dauert vorzugsweise kürzer als 1 Sekunde. Es fließt in den Verbindungsleitungen zwischen der Wicklung 15 und dem Betätigungsausgang 32 ein Strom i_{Z}, der so groß ist, dass das Stellglied 4 aus seiner Schließstellung 5 in seine Offenstellung 6 überführt wird. Gleichzeitig liegt an dem Zündspannungsausgang 35 eine Folge von Zündimpulsen an, die bspw. zu Funkenüberschlägen an der Zündfunkenstrecke eines Brenners führen.

Gleichzeitig mit dem Strom- oder Spannungsimpuls an dem Betätigungsausgang 32 gibt die Steuereinrichtung 31 an ihrem Halteausgang 33 ein Stromsignal ab, das die Spule 27 erregt. Das Stromsignal i_{H} kann sich dabei aus zwei in Figur 2 veranschaulichten Einzelströmen i_{H1} und i_{H2} zusammensetzen. i_{H} kann die Summe aus den beiden Strömen i_{H1}, i_{H2} sein. Alternativ ist es möglich, dass i_{H} vor Ablauf einer Haltezeit t_{H} = i_{H1} ist (i_{H} = i_{H1}), und dass i_{H} nach Ablauf der Haltezeit t_{H} = i_{H2} (i_{H} = i_{H2}). Dabei wird bei einer bevorzugten Ausführungsform der Haltestrom i_{H1} der oben genannten Batteriestromquelle der Steuereinrichtung 31 entnommen, während der Strom i_{H2} von dem Thermostromgenerator 34 geliefert wird.

Auf diese Weise wird mit Ablauf der Haltezeit t_{H} keinerlei Stromentnahme aus der Batteriestromquelle mehr erforderlich. Dennoch bleibt die Magnetventileinrichtung 1 so lange in Offenstellung 6, wie der Haltestrom i_{H} fließt. Außerdem wird die Magnetventileinrichtung 1 nach dem Impulsöffnungsvorgang der durch die Magnet-Betätigungseinrichtung 2 durchgeführt wird, durch die von dem Thermostromgenerator 34 unabhängige Bestromung der Magnet-Halteeinrichtung 3 sicher in Offenstellung gehalten, bis die Stromübernahme durch den Thermostromgenerator 34 erfolgt.

Die Magnet-Halteeinrichtung 3 ist somit zugleich Halteeinrichtung für das dauerhafte Offenhalten des Ventils und Fangeinrichtung, um das nach dem Impulsöffnungsvorgang mit Schwung in Offenstellung 6 ankommende Stellglied 4 auch nach Wegfall des Öffnungsimpulses i_{Z} in Offenstellung zu halten, also gewissermaßen aufzufangen. Beides wird durch die Bestromung der Spule 27 bewirkt, wobei der Strom i_{H1} das Fangen und der Strom i_{H2} das dauerhafte Halten bewirkt.

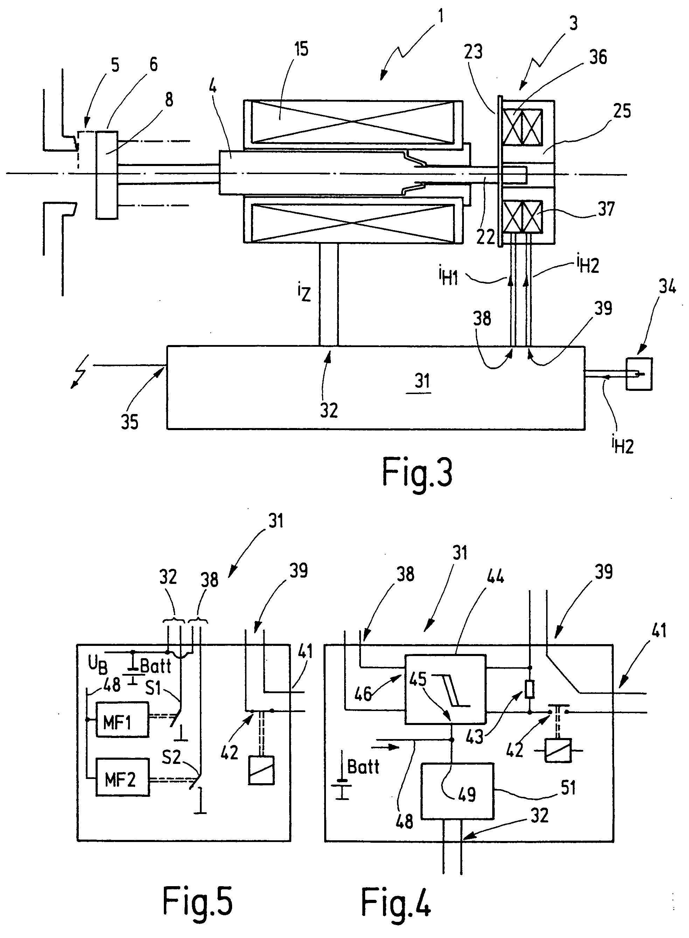

Bei einer in Figur 3 veranschaulichten alternativen Ausführungsform der Magnetventileinrichtung 1 ist die Magnet-Halteeinrichtung 3 mit einer Fangspule 36, die mit dem Kern 25 und der Ankerscheibe 23 eine Fangeinrichtung bildet, und mit einer Haltespule 37 versehen. Letztere bildet mit dem Kern 25 und der Ankerscheibe 23 eine Halteeinrichtung. Beiden Spulen 36, 37 sind gesonderte Ausgänge der Steuereinrichtung 31, d.h. ein Fangausgang 38 und ein Halteausgang 39 zugeordnet. Die Fangspule 36 wird mit dem in Figur 2 veranschaulichten Haltestrom i_{H1} beaufschlagt und die Haltespule 37 wird mit dem Thermostrom i_{H2} beaufschlagt. Der Haltestrom i_{H1} der Fangspule wird lediglich befristet, der Batteriestromquelle entnommen und in die Fangspule 36 gespeist. Je nach Ausführungsform fällt der Haltestrom i_{H1} weg, sobald die Haltezeit t_{H} überschritten ist oder der Haltestrom i_{H2} (Thermostrom) einen Mindestwert übersteigt.

In Figur 4 ist die Steuereinrichtung 31 auszugsweise und in Form eines Prinzipschaltbilds dargestellt. Es handelt sich hier um die Ausführungsform der Steuereinrichtung 31 mit Thermostromüberwachung. Dieser wird von dem Thermostromgenerator 34 an einen Thermostromeingang 41 geliefert. Von dem Thermostromeingang 41 wird der Haltestrom über einen Ruhekontakt 42 eines Abschaltrelais und einen Stromsensor 43 an den Halteausgang 39 weitergegeben. Der Ruhekontakt 42 ist geschlossen (lässt Strom durch), wenn das zugehörige Relais nicht angesteuert ist. Wird das Relais angesteuert, wird der Ruhekontakt 42 unterbrochen.

Der Stromsensor 43 kann ein niederohmiger Shunt oder ein anderweitiger Sensor sein. In Frage kommt z.B. eine Feldplatte oder ein anderer Magnetfeldsensor, der dass von dem Thermostrom i_{H} erzeugte Magnetfeld erfasst.

An den Stromsensor 43 ist ein Schwellwertschalter 44 angeschlossen. Dieser weist außerdem einen Aktivierungseingang 45 auf. An seinem Ausgang 46, der mit dem Fangausgang 38 verbunden ist, gibt der Schwellwertschalter 44 ein Signal ab, wenn der Aktivierungseingang 45 ein Aktivierungssignal erhält und der von dem Stromsensor 43 erfasste Strom einen Schwellwert unterschreitet. Das Stromsignal an dem Ausgang 46 oder ein entsprechendes an dem Ausgang 46 ausgegebenes Spannungssignal ist so bemessen, dass der über den Fangausgang 38 zu der Fangspule 36 fließende Haltestrom i_{H1} lediglich wenige Milliampere beträgt.

Der Aktivierungseingang 45 ist mit einer Aktivierungsleitung 48 verbunden, die ein Signal erhält, sobald die Magnetventileinrichtung 1 öffnen soll (0-Punkt in Figur 2). Die Aktivierungsleitung 48 führt außerdem zu einem Aktivierungseingang 49 einer Ansteuerschaltung 51, zur Erzeugung des Öffnungsimpulses i_{Z}. Die Ansteuerschaltung 51 ist bspw. ein Monoflop, das auf einige 10-Millisekunden eingestellt ist und über diese Zeit an dem Betätigungsausgang 32 ein Batteriespannungssignal abgibt. Bei entsprechend niederohmiger Auslegung der Wicklung 15 entsteht dadurch ein kurzer kräftiger Stromimpuls, der das Ventil öffnet.

Eine alternative Ausführungsform der Steuereinrichtung 31 ist in Figur 5 veranschaulicht. Die Übernahme der Haltefunktion für das Stellglied 4 von der Fangspule 36 auf die Haltespule 37 erfolgt hier rein zeitgesteuert. Über ein erstes Monoflop MF1, das einen Schalter S1, bspw. einen entsprechenden Transistor steuert, wird an dem Betätigungsausgang 32 ein kurzzeitiges Betätigungssignal abgegeben (Figur 2 von 0 bis T1). Ein zweites Monoflop MF2 steuert einen zweiten Schalter S2 (bspw. einen entsprechenden Transistor), um an dem Fangausgang 38 ein Fangsignal (Strom i_{H1}) abzugeben. Dies entspricht der Zeitspanne 0 bis t_{H} in Figur 2. Diese Zeitspanne ist so bemessen, dass bei ordnungsgemäßer Funktion eines an die Magnetventileinrichtung 1 angeschlossenen Brenners, unabhängig von seiner Leistung, an den Thermostromgenerator 34 zwischenzeitlich ein ausreichender Strom entsteht. Dieser wird, wie Figur 5 veranschaulicht, über den Ruhekontakt 42 von dem Thermostromeingang 41 ungeprüft an den Halteausgang 39 weitergegeben.

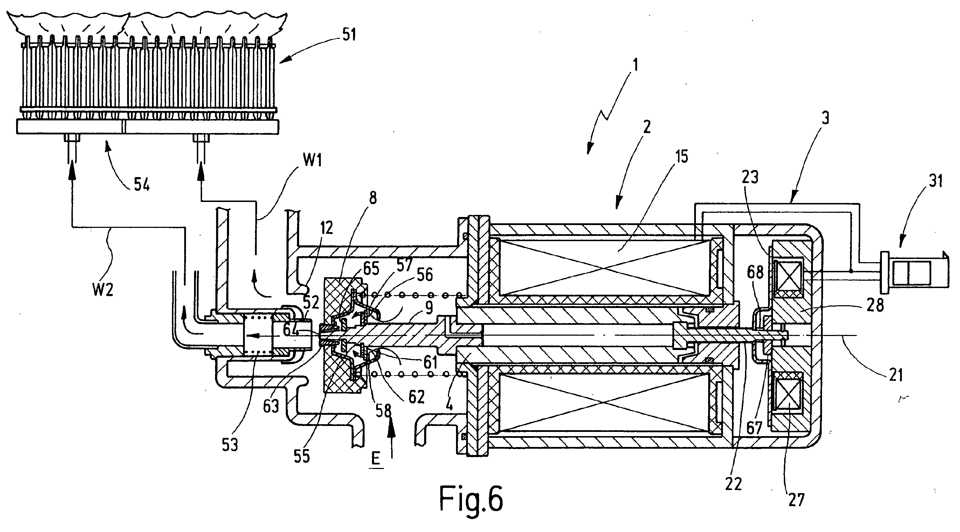

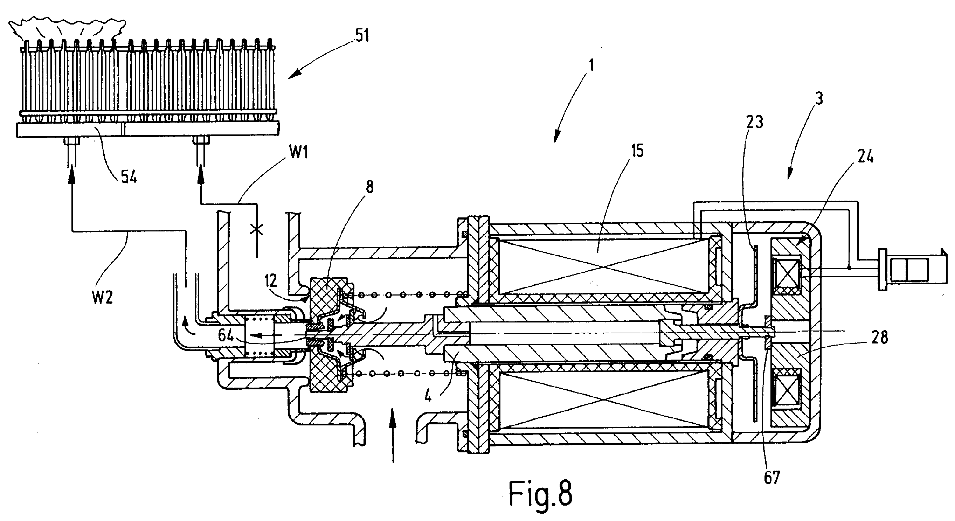

In Figur 6, 7 und 8 ist eine weitere Ausführungsform der erfindungsgemäßen Magnetventileinrichtung 1 veranschaulicht. Soweit mit den vorstehend beschriebenen Ausführungsformen bauliche oder funktionelle Übereinstimmung besteht, werden gleiche Bezugszeichen zugrundegelegt und es wird auf die vorstehende Beschreibung verwiesen.

Im Unterschied zu der vorstehend beschriebenen Ausführungsform weist die Magnetventileinrichtung nach den Figuren 6, 7 und 8 mehrere, dem Stellglied 4 zugeordnete Ventile auf. Ein erstes Ventil wird durch das Ventilverschlussglied 8 und den Ventilsitz 12 gebildet. Dieses Ventil steuert einen Kanal W1, der von einem Eingang E zu einem ersten Brenner 51 führt. Konzentrisch zu der den Ventilsitz 12 definierenden Öffnung ist innerhalb derselben ein zweiter Ventilsitz 52 angeordnet, dem ebenfalls das Ventilverschlussglied 8 zugeordnet ist. Der Ventilsitz 52 wird durch eine axial verschiebbar gelagerte, koaxial zu der Längsmittelachse 21 angeordnete Hülse gebildet, die durch eine Feder 53 gegen einen Anschlag gespannt ist. Ihre Mündungsberandung ragt in dieser Position etwas über die Berandung der den Ventilsitz 12 bildenden Öffnung vor, so dass das Ventilverschlussglied 8 bei seiner Überführung von seiner Schließstellung in Offenstellung zuerst den Ventilsitz 12 und dann den Ventilsitz 52 freigibt. Das von dem Ventilverschlussglied 8 und dem Ventilsitz 52 gebildete Ventil steuert einen von dem Eingang E zu einem zweiten Brenner 54 führenden Kanal W2.

Abweichend von dem in Zusammenhang mit den Figuren 1 bis 5 beschriebenen Ausführungsbeispielen ist bei dem Ausführungsbeispiel nach Figur 6 keine feste Verbindung zwischen dem Ventilverschlussglied 8 und der Ventilspindel (Stange 9) vorhanden. Vielmehr ist das Ventilverschlussglied 8 axial mit begrenzter Beweglichkeit auf der Stange 9 verschiebbar gelagert. Die Stange 9 trägt dazu eine über einen Sprengring 55 an der Stange 9 gesicherte Zahn- oder Lochscheibe 56, die an radial einwärts gebogenen und nach innen weisenden Fingern 57 eines Gehäuseelements 58 Anlage findet. Das Gehäuseelement 58 weist weitere axial von den Fingern 57 beabstandete und radial nach innen gebogene Finger 61 auf, die als Widerlager für eine konisch gewickelte Druckfeder 62 dienen. Diese spannt die Stange 9 in einer Richtung vor (in Figur 6 nach links), in der die Mitnehmerscheibe 56 von den Fingern 57 abhebt.

In dem Ventilverschlussglied 8 sitzt zentral eine Ventilbuchse 63, die mit einem kegelförmigen Ende 64 der Stange 9 (Ventilspindel) ein Sitzventil definiert. Zusätzlich kann an der innenliegenden Seite der Ventilspindel eine Dichtungsscheibe 65 vorgesehen sein. Diese findet Anlage an dem Innenrand der kegelförmigen Öffnung der Ventilbuchse 63, unter Vorspannung der Feder 62.

Die Ventilbuchse 63 und die Ventilspindel 64 bilden ein Ventil, das einen von dem Eingang E zu dem Brenner 54 führenden Kanal steuert. Dieses Ventil lässt lediglich geringe Gasmengen durch, wenn es offen ist und kann somit als Zündventil dienen.

Die Magnet-Halteeinrichtung 3 weist zusätzlich zu der Ankerscheibe 23 eine Ankerscheibe 67 auf, die axial beweglich auf einem Ende des Stifts 22 gelagert ist. Die Ankerscheibe 23 ist über einen Gewindering 68 axial fest an dem Stift 22 gehalten. Die Ankerscheibe 67 ist axial beweglich gelagert. Die Ankerscheibe 67 weist einen wesentlich geringeren Durchmesser als die Ankerscheibe 23 auf. Während die Ankerscheibe 23 den äußeren Rand des topfförmigen Kerns 25 mit seinem Mittelschenkel 28 magnetisch verbinden kann (überbrücken kann), findet die Ankerscheibe 67 nur an einem Teil des Mittelschenkels 28 Anlage. Ihr Durchmesser ist geringer als der des Mittelschenkels 28. Die Ankerscheibe 23 weist einen mittleren Nabenteil auf, dessen Innenraum größer ist, als die Ankerscheibe 67, so dass diese in diesem Innenraum überführt werden kann.

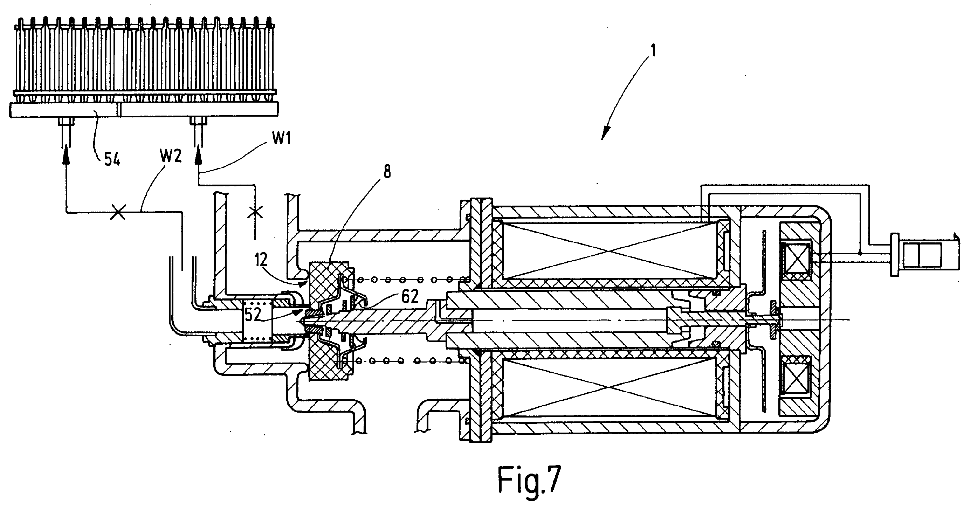

Zur Verdeutlichung der Arbeitsweise wird auf Figur 7 verwiesen, die die Magnetventileinrichtung 1 nach Figur 6 in Schließstellung zeigt. Alle drei Ventile sind geschlossen. Das Ventilverschlussglied 8 sitzt sowohl auf dem Ventilsitz 12, als auch auf dem Ventilsitz 52 auf. Die Ventilspindel 64 schließt unter dem Druck der Druckfeder 62 die Ventilbuchse 63. Beide Gaswege W1, W2 sind somit abgesperrt.

Erhält nun die Spule 15 einen ersten Öffnungsimpuls, wird das Stellglied 4 lediglich ein kurzes Wegstück bewegt. Das Stellglied hebt somit die Ventilspindel 64 aus der Ventilbuchse 63, so dass für den Weg W2 eine Zündgasmenge freigegeben werden kann. Der Brenner 54 kann somit gezündet werden und brennt zunächst mit kleiner Flamme. In dieser Stellung setzt die Ankerscheibe 67 auf den Mittelschenkel 28, der mit Haltestrom betriebenen Magnet-Halteeinrichtung 3 auf, so dass das Zündgasventil offengehalten wird. Gleichzeitig kann bei entsprechender Auslegung der Magnetventileinrichtung 1 das Ventilverschlussglied 8 geringfügigst von dem Ventilsitz 12 abheben, um für den Weg W1 eine beschränkte Gasmenge freizugeben, die zum Zünden des Brenners 51 führt, wobei dieser danach in Teilleistung oder Teillast betrieben wird. Alternativ kann dieser Weg W1 jedoch auch vollständig geschlossen bleiben.

Ein zweiter, an die Wicklung 15 gegebener, Öffnungsimpuls überführt nun das Stellglied 4 in seine in Figur 6 veranschaulichte Stellung, wobei die Ankerscheibe 23 auf den Topfmagneten 24 aufsetzt und alle Ventile offen sind. Insbesondere sind die Gaswege W1, W2 vollständig freigegeben. In Figur 6 ist dies durch Flammen an den Brennern 51, 54 veranschaulicht.

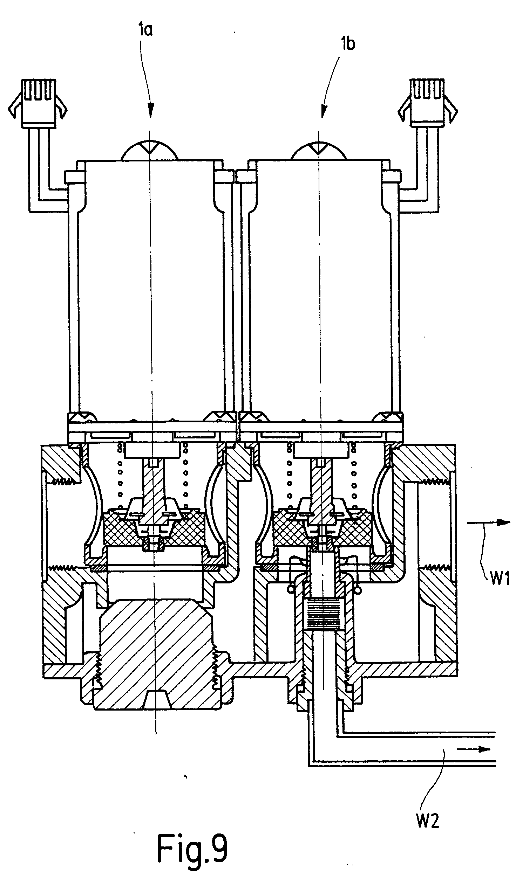

Die veranschaulichte Magnetventileinrichtung 1 kann, wie Figur 9 zeigt, zum Aufbau von Ventileinheiten dienen, die zwei in Reihe geschaltete Ventile aufweisen. Beide können durch erfindungsgemäße Magnetventileinrichtungen gebildet werden. In Figur 9 sind dies die Magnet-Ventileinrichtung 1a und die Magnetventileinrichtung 1b.

Die Magnetventileinrichtungen 1a, 1b sind untereinander im Wesentlichen gleich aufgebaut, insbesondere im Hinblick auf ihre Antriebseinrichtung. Sie entsprechen beide im Wesentlichen der Magnetventileinrichtung 1 nach den Figuren 6 bis 8, wobei bei der Magnetventileinrichtung 1a (Figur 9) der Ventilsitz 52 entfallen ist. Die Magnet-Ventileinrichtung 1a dient als Hauptventil. Die Magnetventileinrichtung 1b dient als Brennerventil mit einer Verzweigung auf zwei Gaswegen W1, W2 und einer Bereitstellung einer Zündgasmenge in dem Gasweg W2.

Mit der Doppelventileinheit nach Figur 9 lässt sich somit mit einem einzigen Grundaufbau, d.h. mit der Magnetventileinrichtung 1 als Grundbaustein ein Ventilmodul aufbauen, der für extrem Stromsparen ausgelegt und somit für Batteriebetrieb geeignet ist und der alle Funktionen von der Gassicherheitsabschaltung über die Bereitstellung von Zündgasmengen und dem stufenweisen Öffnen des Brennerventils übernimmt. Für beide Magnetventileinrichtungen 1a, 1b kommen wegen des übereintenden Grundaufbaus im Wesentlichen gleiche Teile zur Anwendung, was die Fertigungskosten niedrig hält.

Eine Magnetventileinrichtung 1 weist eine Magnet-Betätigungseinrichtung 2 und eine Magnet-Halteeinrichtung 3 auf, wobei die Magnet-Betätigungseinrichtung 2 durch eine Steuereinrichtung 31 nur kurzzeitig betätigt und die Magnet-Halteeinrichtung 3 durch Thermostrom eines Thermostromgenerators 34 während der Öffnungsphase der Magnetventileinrichtung 1 dauernd bestromt wird. Batteriestrom benötigt diese Magnetventileinrichtung 1 nur zur Überführung aus der Schließstellung 5 in die Offenstellung 6 sowie ggfs. noch für einige Sekunden bis zur ausreichenden Erzeugung von Thermostrom.

## Patentansprüche

1. Magnetventileinrichtung (1), insbesondere für Gas führende Einrichtungen,
mit einem Stellglied (4), das zwischen einer Schließstellung (5) und einer Offenstellung (6) beweglich gelagert ist,
mit einer Magnet-Betätigungseinrichtung (2), die mechanisch mit dem Stellglied (4) und elektrisch einer elektrischen Steuereinrichtung (31) verbunden und darauf eingerichtet ist, das Stellglied (4) aus seiner Schließstellung (5) in seine Offenstellung (6) zu überführen, und
mit einer Magnet-Halteeinrichtung (3), die mechanisch mit dem Stellglied (4) und elektrisch mit einem Thermostromgenerator (34) verbunden und dazu eingerichtet ist, das Stellglied (3) in seiner Offenstellung (6) zu halten.

2. Magnetventileinrichtung nach Anspruch 1, **dadurch gekennzeichnet, dass** das Stellglied (4) in einer Bewegungsrichtung (7) linear beweglich gelagert ist.

3. Magnetventileinrichtung nach Anspruch 1, **dadurch gekennzeichnet, dass** das Stellglied (4) mit einem Federelement (11) verbunden ist, das das Stellglied (4) auf seine Schließstellung (5) hin vorspannt.

4. Magnetventileinrichtung nach Anspruch 1, **dadurch gekennzeichnet, dass** die Magnet-Halteeinrichtung (3) einen ortsfest gelagerten Elektromagneten (24) aufweist, dessen Wicklung (27) in Betrieb von dem Thermostrom des Thermostromgenerators (34) durchflossen ist, und dass zu der Magnet-Halteeinrichtung (3) ein beweglich gelagerter Anker (23) gehört, der mit dem Stellglied (4) verbunden ist.

5. Magnetventileinrichtung nach Anspruch 2 und 4, **dadurch gekennzeichnet, dass** der Elektromagnet (24) als Topfmagnet ausgebildet ist, der konzentrisch zu einer von der Bewegungsrichtung festgelegten Achse (21) angeordnet ist.

6. Magnetventileinrichtung nach Anspruch 4 und 5, **dadurch gekennzeichnet, dass** der Anker (23) als Scheibe ausgebildet ist, die konzentrisch zu dem Topfmagneten (24) festgelegt ist.

7. Magnetventileinrichtung nach Anspruch 1, **dadurch gekennzeichnet, dass** zu der Magnet-Halteeinrichtung (3) eine Halteeinrichtung (37) und eine Fangeinrichtung (36) gehören.

8. Magnetventileinrichtung nach Anspruch 7, **dadurch gekennzeichnet, dass** die Antriebseinrichtungen (15, 36, 37) der Magnet-Betätigungseinrichtung (2) und der Fangeinrichtung (3) voneinander baulich getrennt sind.

9. Magnetventileinrichtung nach Anspruch 7, **dadurch gekennzeichnet, dass** die Fangeinrichtung (36) eine Haltekraft aufweist, die zumindest so groß ist wie die von der Halteeinrichtung (37) aufgebrachte Haltekraft.

10. Magnetventileinrichtung nach Anspruch 7, **dadurch gekennzeichnet, dass** die Fangeinrichtung (36) eine Zwischenstellung (Fig. 8) festlegt, die zwischen der Offenstellung (6) und der Schließstellung (5) angeordnet ist.

11. Magnetventileinrichtung nach Anspruch 1, **dadurch gekennzeichnet, dass** das Stellglied (4) mit wenigstens einem Ventilverschlussglied (8) verbunden ist, das auf einem Ventilsitz (12) abdichtend aufsitzt, wenn sich das Stellglied (8) in Schließstellung (5) befindet, und das von dem Ventilsitz (12) abgehoben ist, wenn sich das Stellglied (8) in Offenstellung (6) befindet.

12. Magnetventileinrichtung nach Anspruch 1, **dadurch gekennzeichnet, dass** das Stellglied (4) mit zwei Ventilverschlussgliedern (8, 64) verbunden ist, denen jeweils ein Ventilsitz (12, 63) zugeordnet ist.

13. Magnetventileinrichtung nach Anspruch 1, **dadurch gekennzeichnet, dass** das Stellglied (4) mit einem Ventilverschlussglied (8) verbunden ist, dem zwei Ventilsitze (12, 52) zugeordnet sind.

14. Magnetventileinrichtung nach Anspruch 13, **dadurch gekennzeichnet, dass** einer der Ventilsitze (12) ortsfest und der andere Ventilsitz in Bewegungsrichtung (7) des Ventilverschlussglieds (8) gegen eine Federkraft beweglich gelagert ist, so dass die Ventilsitze (8, 52) von dem Ventilverschlussglied nacheinander freigegeben werden.

15. Magnetventileinrichtung nach Anspruch 14, **dadurch gekennzeichnet, dass** die Magnet-Halteeinrichtung (3) eine Zwischenstellung festlegt, die zwischen der Offenstellung (6) und der Schließstellung (5) liegt, in der das Ventilverschlussglied (8) beide Ventilsitze (12, 52) verschließt, und dass das Ventilverschlussglied (8) in der Zwischenstellung nur einen der Ventilsitze (12) zumindest gedrosselt freigibt.

16. Magnetventileinrichtung nach Anspruch 10 und 12, **dadurch gekennzeichnet, dass** in Zwischenstellung eines der Ventilverschlussglieder (64) von dem ihm zugeordneten Ventilsitz (63) abgehoben ist und dass in Offenstellung beide Ventilverschlussglieder (8, 64) von den ihnen zugeordneten Ventilsitzen (12, 63) abgehoben sind.

17. Magnetventileinrichtung nach Anspruch 1, **dadurch gekennzeichnet, dass** zwei Ventilverschlussglieder (8, 64) und Ventilsitze (52, 63) vorgesehen sind, die Sitzventile bilden, die parallel geschaltet sind.

18. Magnetventileinrichtung nach Anspruch 1, **dadurch gekennzeichnet, dass** ein oder zwei Ventilverschlussglieder (8) und Ventilsitze (12, 52) vorgesehen sind, die Sitzventile bilden, die zu unterschiedlichen Ausgangsanschlüssen führende Strömungswegen (w1, w2) steuern.

19. Magnetventileinrichtung nach Anspruch 1, **dadurch gekennzeichnet, dass** das Stellglied (4) mit Ventilverschlussgliedern (8, 64) verbunden ist, denen dreiVentilsitze (12, 52, 63) zugeordnet sind.

20. Magnetventileinrichtung nach Anspruch 12 oder 19, **dadurch gekennzeichnet, dass** die Ventilverschlussglieder (8, 64) in unterschiedlichen Axialpositionen des Stellglieds (4) mit ihren jeweiligen Ventilsitzen (12, 52, 63) in Anlage gelangen.

21. Gas-Steuereinrichtung mit einer Magnetventileinrichtung nach einem der vorhergehenden Ansprüche, **dadurch gekennzeichnet, dass** sie eine Steuereinheit (31) aufweist, an die die Magnet-Betätigungseinrichtung (2) und die Magnet-Halteeinrichtung (3) angeschlossen ist.

22. Gas-Steuereinrichtung nach Anspruch 21, **dadurch gekennzeichnet, dass** die Steuereinheit (31) eine erste Versorgungsquelle (Batt), die an die Magnet-Betätigungseinrichtung (2) angeschlossen ist, und eine zweite Versorgungsquelle (34) aufweist, die an die Magnet-Halteeinrichtung (2) angeschlossen ist.

23. Gas-Steuereinrichtung nach Anspruch 21, **dadurch gekennzeichnet, dass** an die Steuereinrichtung (31) eine Magnetventileinrichtung (1) nach Anspruch 7 angeschlossen ist und dass die Steuereinrichtung (31) eine Versorgungsquelle (Batt) für die Fangeinrichtung (36) enthält.

24. Gas-Steuereinrichtung nach Anspruch 22 oder 23, **dadurch gekennzeichnet, dass** die Versorgungsquellen zu unterschiedlichen Zeitpunkten ein- und ausgeschaltet werden.
